# DEMANDE DE BREVET EUROPEEN

(11) **EP 0 521 769 A1**
(43) Date de publication de la demande: **07.01.1993**
(21) Numéro de dépôt: 92401853.4
(22) Date de dépôt: 30.06.1992
(51) Int. Cl.: F16H 3/66, F16H 47/08, F16H 37/04

(54) **Dispositif de changement de vitesses automatique transversal en bout à double descente d'engrenages**

(30) Priorité: 03.07.1991 FR 9108252
(71) Demandeur: REGIE NATIONALE DES USINES RENAULT S.A., F-92109 Boulogne Billancourt (FR)
(72) Inventeur: Leorat, François, F-78000 Versailles (FR); Buannec, Michel, F-92000 Nanterre (FR)

(57) **Abrégé**

Dispositif de changement de vitesses automatique de type transversal en bout, présentant à l'intérieur d'un carter (30) un axe primaire (3) aligné sur l'axe de sortie (12) du moteur, et portant un convertisseur hydraulique (1), cet axe primaire (3) entraînant, par l'intermédiaire d'engrenages cylindriques (10, 11, 13, 26) associés à plusieurs embrayages et moyens d'immobilisation (14, 15, 17, 18, 19), un axe secondaire parallèle à l'axe primaire (3), l'axe secondaire (4) portant lui-même un train épicycloïdal (5), caractérisé en ce que l'ensemble des embrayages et des moyens d'immobilisation (14, 15, 18, 19) sont regroupés sur l'axe primaire (3) à l'exception d'un seul moyen d'immobilisation (17) porté par l'axe secondaire (4).

## Description

L'invention se rapporte au domaine technique des transmissions automatiques comportant un convertisseur de couple entraîné directement par le moteur du véhicule et associé à un train épicycloïdal commandé par des freins et des embrayages. Plus précisément, elle concerne une boîte de vitesses automatique (BVA) destinée à être intégrée dans un groupe motopropulseur (GMP) transversal.

On peut distinguer deux tendances lourdes dans l'évolution des transmissions sur les véhicules automobiles, à savoir la généralisation des groupes motopropulseurs transversaux sur les véhicules haut de gamme, et les exigences croissantes en matière d'économie de carburant et de silence de fonctionnement.

Dans le domaine des transmissions automatiques, cette double tendance se traduit par des difficultés constructives croissantes puisque simultanément:
- les couples à transmettre augmentent avec le niveau de gamme du véhicule;
- la diversité des applications et les exigences croissantes de la clientèle, désirant pouvoir disposer de prestations techniques diversifiées, rendent souhaitable de pouvoir proposer une transmission à quatre ou une transmission à cinq rapports, élaborées à partir du même concept de base ;
- la longueur de la transmission est sévèrement limitée par la disposition transversale du GMP.

Pour résoudre ces problèmes constructifs, diverses solutions ont été proposées, parmi lesquelles on pourra mentionner :
- la disposition classique d'une boîte de vitesses automatique selon laquelle le convertisseur de couple et le train épicycloïdal sont coaxiaux, illustrée notamment par la publication FR 2.454.567 de la demanderesse : le train épicycloïdal décrit dans cette publication permet d'obtenir quatre rapports de marche avant et un rapport de marche arrière, grâce à la combinaison de trois embrayages et de deux moyens d'immobilisation;
- le concept mis en oeuvre par certains constructeurs américains pour l'accouplement à des moteurs en V : convertisseur, pompe et distributeur hydraulique en bout de moteur, transmission de mouvement entre turbine et arbre secondaire par chaîne silencieuse, sortie du mouvement vers les roues concentrique à l'arbre secondaire et à l'ensemble du mécanisme par pont planétaire, l'ensemble du mécanisme étant disposé derrière le moteur et parallèlement à lui. Outre une complexité certaine, ce concept implique une transmission gauche très courte et des difficultés de solidarisation de la boîte de vitesses au moteur pouvant, le cas échéant, conduire à des problèmes vibratoires ;
- le concept industrialisé par des constructeurs japonais, consistant à répartir les constituants mécaniques - trains planétaires et mécanisme de commutation - entre les arbres primaire et secondaire de boîte : cette disposition conduit effectivement à une longueur de boîte faible, mais au prix d'une redondance mécanique se traduisant par une grande complexité : une telle boîte à seulement quatre rapports comporte typiquement quatre freins, trois embrayages et trois roues libres, alors que le minimum technique exige seulement trois embrayages et deux freins (ou deux embrayages et trois freins) ;
- le concept développé dans la demande de brevet français n° 91-06329 de la demanderesse non publiée à ce jour, notamment en rapport avec sa figure 1 : les organes de commutation de la transmission sont regroupés sur l'axe primaire, tandis que le train planétaire, situé sur l'axe secondaire, voit ses éléments constitutifs reliés aux organes de commutation par trois trains d'engrenages cylindriques réalisant les liaisons cinématiques appropriées. Cette disposition permet de réaliser, dans un encombrement axial extrêmement réduit, une transmission offrant jusqu'à six rapports de marche avant à partir d'un unique train planétaire composé.

Les deux premières solutions conduisent typiquement à des BVA à quatre rapports de marche avant, pour lesquelles la solution usuelle de mise à disposition d'un cinquième rapport consiste à ajouter un train planétaire simple complémentaire contrôlé par des organes de commutation appropriés : il en résulte une complexification importante de la BVA tant du point de vue de la mécanique que de l'hydraulique de commande, et surtout, un allongement axial qui peut se révéler rédhibitoire pour l'installation du GMP dans le véhicule.

Les BVA à quatre rapports construites selon les principes de la 3ème solution peuvent être assez simplement converties en BVA à cinq rapports au prix de l'adjonction d'un embrayage supplémentaire : la grande complexité initiale de ces BVA en est encore accrue, et leur faible longueur axiale s'en trouve compromise, ce qui relativise alors leur intérêt.

La mise en oeuvre de la quatrième solution conduit clairement à la réalisation d'une BVA à cinq ou six rapports de marche avant : il est bien sûr tout à fait possible de se limiter à l'utilisation de quatre rapports, ce qui ne se traduit que par une simplification marginale de l'hydraulique de commande, et conduit à une relative sous-utilisation du potentiel mécanique de la BVA.

Le but de la présente invention est de proposer un nouveau concept de BVA, offrant tous les avantages de compacité qui sont l'apanage de la transmission décrite dans la demande de brevet français n° 91-06929 : ce nouveau concept constitue une solution spécifique au problème de la réalisation d'une BVA à quatre rapports à mécanisme et hydraulique de commande simplifiés, conservant toutefois l'avantage de la flexibilité dans le choix des rapports.

Elle concerne un dispositif de changement de vitesses automatique de type transversal en bout présentant, à l'intérieur d'un carter, un axe primaire aligné sur l'axe de sortie du moteur, et portant un convertisseur hydraulique, cet axe primaire entraînant, par l'intermédiaire d'engrenages cylindriques associés à plusieurs embrayages et moyens d'immobilisation, un axe secondaire parallèle à l'axe primaire, l'axe secondaire portant lui-même un train épicycloïdal. Ce dispositif est caractérisé en ce que l'ensemble des embrayages et des moyens d'immobilisation sont regroupés sur l'axe primaire, à l'exception d'un seul moyen d'immobilisation porté par l'axe secondaire.

Selon un mode de réalisation de l'invention l'ensemble des embrayages et des moyens d'immobilisation est constitué d'un premier embrayage E₁, d'un second embrayage E₂, d'un premier moyen d'immobilisation F₁, d'un second moyen d'immobilisation F₂ et d'un troisième moyen d'immobilisation F₃.

Selon un mode de réalisation de l'invention, le train épicycloïdal comporte un porte-satellite et un premier planétaire P₁ engrenant, avec un satellite court lui-même en prise avec un satellite long engrenant, d'une part avec un second planétaire P₂, et d'autre part avec la couronne de sortie du tri épicycloïdal.

Selon un mode de réalisation de l'invention, la couronne de sortie du train épicycloïdal est liée au pignon d'attaque d'une couronne de réduction finale accouplée au différentiel.

Selon un mode de réalisation de l'invention, le premier et le second planétaires P₁, P₂ sont montés sur deux arbres coaxiaux alignés sur l'axe secondaire.

Selon un mode de réalisation de l'invention, le second planétaire P₂ et le porte-satellite sont liés par des pignons de liaison respectifs aux embrayages et aux moyens d'immobilisation appropriés regroupés sur l'axe primaire.

Selon un mode de réalisation de l'invention, l'axe primaire porte le moyeu du premier embrayage destiné à rendre solidaire l'axe primaire du premier planétaire P₁.

Selon un mode de réalisation de l'invention, l'axe primaire porte le moyeu du second embrayage E₂, destiné à rendre solidaire l'axe primaire du porte-satellite.

Selon un mode de réalisation de l'invention, le premier planétaire P₁ peut être immobilisé par rapport au carter à l'aide du premier moyen d'immobilisation F₁.

Selon un mode de réalisation de l'invention, le premier moyen d'immobilisation F₁ est porté par l'axe secondaire.

Selon un mode de réalisation de l'invention, la cloche du second embrayage E₂, peut être immobilisée par rapport au carter à l'aide du second moyen d'immobilisation.

Selon un mode de réalisation de l'invention, la cloche du premier embrayage peut être immobilisée par rapport au carter à l'aide du troisième moyen F₃ d'immobilisation.

Selon un mode de réalisation de l'invention, le premier rapport de marche avant est obtenu par serrage du premier embrayage E₁ et du premier moyen d'immobilisation F₁.

Selon un mode de réalisation de l'invention, le second rapport de marche avant est obtenu par serrage du second embrayage E₂ et du premier moyen d'immobilisation F₁.

Selon un mode de réalisation de l'invention, le troisième rapport de marche avant est obtenu par serrage du premier et du second embrayages E₁, E₂.

Selon un mode de réalisation de l'invention, le quatrième rapport de marche avant est obtenu par serrage du second embrayage E₂ et du troisième moyen d'immobilisation F₃.

Selon un mode de réalisation de l'invention, la marche arrière est obtenue en serrant le premier embrayage E₁ et le second moyen d'immobilisation F₂.

L'invention sera mieux comprise à la lecture de la description suivante d'un mode de réalisation particulier, en liaison avec les dessins annexés sur lesquels :
- la figure 1 représente le dispositif de changement de vitesses automatique selon l'invention ;
- la figure 2 explicite la table de commutation du dispositif ;
- la figure 3 restitue l'abaque de Ravigneaux de l'arrangement cinématique correspondant à l'invention.

Le mode de réalisation particulier faisant l'objet de cette description illustre une application de l'invention construite autour de l'adaptation d'un train planétaire de type Ravigneaux I . Bien entendu, cette application n'est pas limitative, et les principes constructifs qui sont à la base de l'invention s'appliqueraient, mutadis mutandis, à tous types de train planétaire réalisant des liaisons cinématiques analogues à celles d'un Ravigneaux I, c'est-à-dire à tout système à quatre arbres dont trois, dans une application classique, sont reliés à l'entrée de boîte par des embrayages, le quatrième arbre étant relié à la sortie.

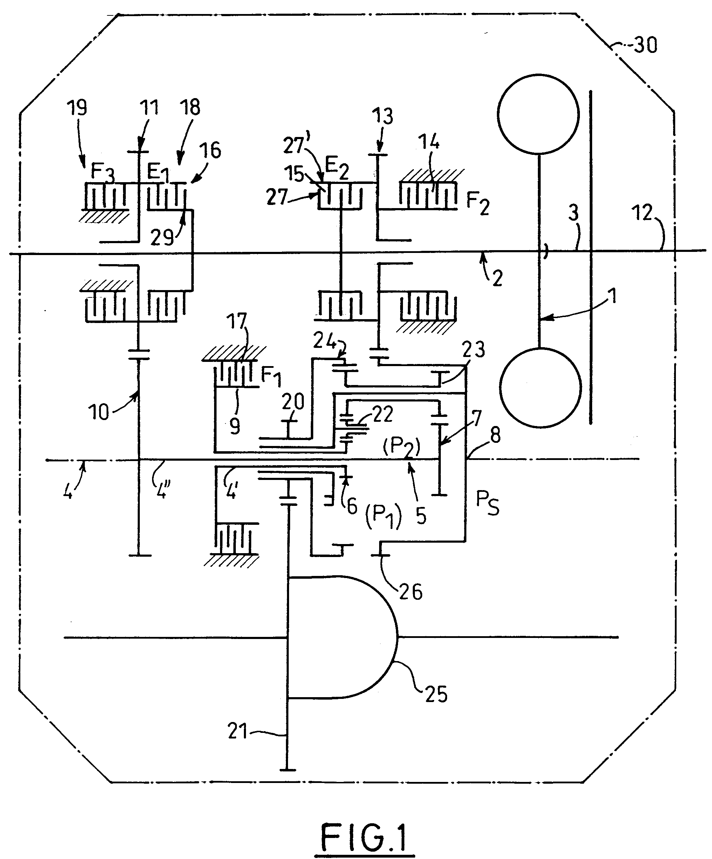

En référence à la figure 1, on voit que sur l'axe primaire 3, qui se confond avec l'axe du vilebrequin du moteur 12 sont rassemblés le convertisseur 1, éventuellement la pompe de servitude non représentée, et un ensemble d'organes de commutation 14, 15, 18, 19. Sur l'axe secondaire 4, on trouve le train Ravigneaux I, 5, qui comporte, comme il est bien connu, un premier planétaire P₁ 6 engrenant avec un satellite court 22, engrenant lui-même avec un satellite long 23. Ce dernier engrène, d'une part avec le planétaire P₂, 7, d'autre part avec la couronne 24 de sortie du train planétaire. La couronne 24 est liée au pignon d'attaque 20 de la réduction finale qui comporte également une couronne 21 accouplée au différentiel 25.

Les planétaires P₁, 6, et P₂, 7, sont respectivement reliés, par des arbres 4′, 4˝ coaxiaux à l'axe secondaire 4, au moyeu 9, du frein F₁, 17, et au pignon 10, tandis que le porte-satellite 8, sur les axes duquel tourillonnent les satellites 6 et 23, présente à sa périphérie une denture cylindrique hélicoïdale 26. Les pignons 10 et 26 assurent la liaison des divers organes du train planétaire 5 avec les autres éléments de commutation appropriés, regroupés sur l'axe primaire 3, comme il a été décrit.

Le mouvement sort du convertisseur pontable 1 par l'arbre de turbine 2, qui porte les moyeux 29 et 27 de deux embrayages E₁ et E₂ 18, 15. L'embrayage E₂, 15, solidarise ainsi, par l'intermédiaire du pignon 13 engrenant avec le pignon 26, l'arbre turbine 2 avec le porte-satellite 8. Le premier moyen d'immobilisation F₁ permet de solidariser le premier planétaire P₁, 6, avec le carter 30. Le premier embrayage E₁, 17, relie, lorsqu'il est serré, l'arbre de turbine 2 au planétaire P₁ 6 par l'intermédiaire de l'engrenage 11, fixé à la cloche 16 de l'embrayage E₁, 18, et engrenant avec le pignon 10. Par ailleurs, la cloche 16 de l'embrayage E₁, 18, et donc l'engrenage 11, peuvent être maintenus à vitesse nulle au moyen du frein F₃, 19, qui, lorsqu'il est serré, les solidarise au carter 30 de la transmission.

Similairement, la cloche 27′ de l'embrayage E₂, 15, et le pignon 13 peuvent être maintenus à vitesse nulle au moyen du frein F₂, 14, qui, lorsqu'il est activé, solidarise le pignon 13 et l'embrayage 15 au carter 30 de la transmission. On voit donc, au travers de la description qui précède, que les connexions cinématiques propres à un train Ravigneaux I sont parfaitement établies, par l'intermédiaire des couples de pignons 10 et 11, ainsi que par le premier moyen d'immobilisation F₁, 17.

Les raisons de ces couples de pignons - ou pignons de descente - sont ajustables en tant que de besoin dans les limites constructives ; ainsi, alors que dans une transmission automatique conventionnelle, l'étagement est strictement défini, et pas toujours de la manière la plus heureuse du point de vue de l'agrément de conduite et de l'adaptation aux caractéristiques du moteur, par les raisons des deux trains élémentaires composant le train Ravigneaux I, l'arrangement cinématique objet de l'invention permet, grâce à l'ajustement des raisons des différents trains de pignons de liaison, de corriger et d'optimiser l'étagement de base procuré par le train Ravigneaux I. Cette possibilité apporte une solution au reproche très généralement fait aux transmissions automatiques conventionnelles, de ne pouvoir offrir que des étagements figés, et le plus souvent pas très bien adaptés.

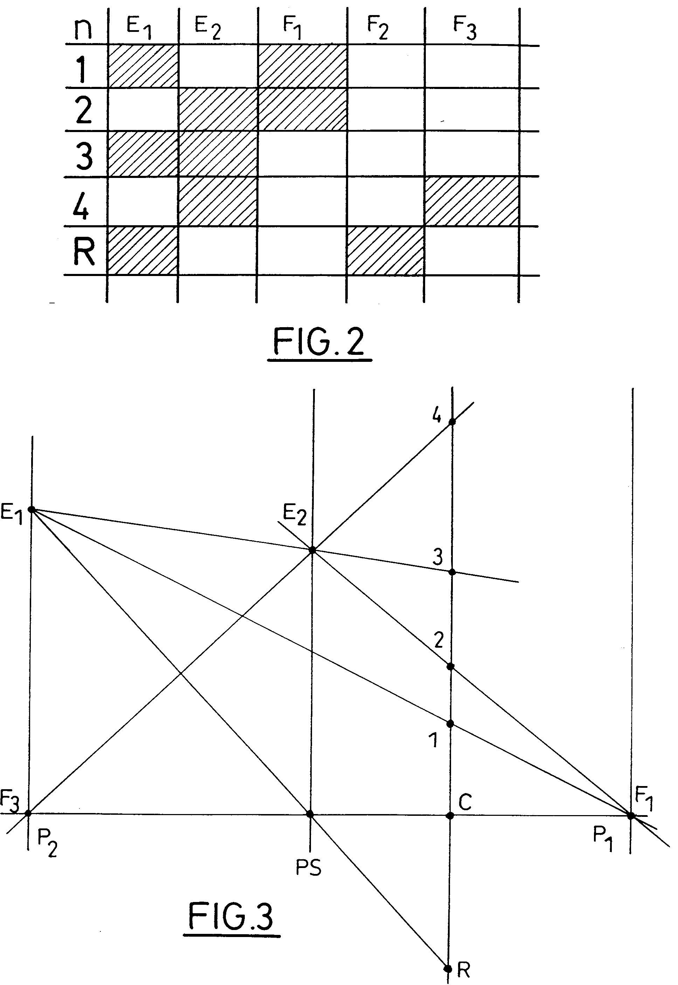

La figure 2 met en évidence que le dispositif de changement de vitesses selon l'invention permet d'obtenir quatre rapports de marche avant et un rapport de marche arrière. Le premier rapport de marche avant est obtenu en serrant le premier embrayage E₁, 18, et en actionnant le premier moyen d'immobilisation F₁, 17. Le second rapport de marche avant correspond au serrage simultané du second embrayage E₂, 15, et du premier moyen d'immobilisation F₁, 17. On obtient le troisième rapport en serrant simultanément le premier et le second embrayages E₁, 18, et E₂, 15, et le quatrième rapport en serrant simultanément le second embrayage E₂, 15, et le troisième moyen d'immobilisation F₃, 19, tandis que le serrage du premier embrayage E₁, 18, et l'actionnement du second moyen d'immobilisation F₂, 14 correspondent à la marche arrière.

Enfin, la figure 3, qui représente, de manière très classique, l'abaque de Ravigneaux de l'arrangement cinématique correspondant à l'invention, permet de visualiser sans difficulté les étagements susceptibles d'être obtenus.

On voit, à la lecture de cette description qu'en appliquant les principes de la présente invention et en les combinant à ceux exposés dans la commande de brevet n°91/06929, il est possible de réaliser une gamme de transmissions automatiques à quatre, cinq ou six rapports de marche avant en utilisant les mêmes pièces communes coûteuses que sont les carters, le train planétaire principal et la majeure partie des organes de commutation, seul le moyen d'immobilisation F₁ étant spécifique de la BVA à quatre rapports, cette dernière étant par ailleurs la plus simple, puisqu'un des trains d'engrenage de descente a été supprimé et qu'un embrayage a été remplacé par un frein.

## Revendications

**[1]** Dispositif de changement de vitesses automatique de type transversal en bout présentant à l'intérieur d'un carter (30) un axe primaire (3) aligne sur l'axe de sortie (12) du moteur, et portant un convertisseur hydraulique (1), cet axe primaire (3) entraînant par l'intermédiaire d'engrenages cylindriques (10, 11, 13, 26) associes à plusieurs embrayages et moyens d'immobilisation (14, 15, 17, 18, 19) un axe secondaire parallèle à l'axe primaire (3), l'axe secondaire (4) portant lui-même un train épicycloïdal (5), caractérisé en ce que l'ensemble des embrayages et des moyens d'immobilisation (14, 15, 18, 19) sont regroupés sur l'axe primaire (3) à l'exception d'un seul moyen d'immobilisation (17) porté par l'axe secondaire (4).

**[2]** Dispositif de changement de vitesses selon la revendication 1, caractérisé en ce que l'ensemble des embrayages et des moyens d'immobilisation (14, 15, 17, 18, 19) est constitué d'un premier embrayage E₁ (18), d'un second embrayage E₂ (15), d'un premier moyen d'immobilisation F₁ (17), d'un second moyen d'immobilisation F₂ (14) et d'un troisième moyen d'immobilisation F₃ (19).

**[3]** Dispositif de changement de vitesses selon les revendications 1 ou 2, caractérisé en ce que le train épicycloïdal (5) comporte un porte-satellite (8) et un premier planétaire P₁ (6) engrenant avec un satellite court (22) lui-même en prise avec un satellite long (23) engrenant, d'une part avec un second planétaire P₂ (7), et d'autre part avec la couronne de sortie (24) du train épicycloïdal (5).

**[4]** Dispositif de changement de vitesses selon la revendication (3), caractérisé en ce que la couronne de sortie (24) du train epicycloïdal (5) est liée au pignon d'attaque d'une couronne de réduction (21) finale accouplée au différentiel (25).

**[5]** Dispositif de changement de vitesses selon l'une quelconque des revendications précédentes, caractérisé en ce que le premier et le second planétaires P₁, P₂ (6, 7) sont montés sur deux arbres coaxiaux (4′, 4˝) alignés sur l'axe secondaire (4).

**[6]** Dispositif de changement de vitesses selon les revendications 3, 4 ou 5, caractérisé en ce que le second planétaire P₂ (7) et le porte-satellite (8) sont lies par des pignons de liaison respectifs (10, 11) et (13) aux embrayages et aux moyens d'immobilisation appropries (14, 15, 18, 19) regroupes sur l'axe primaire (3).

**[7]** Dispositif de changement de vitesses selon l'une quelconque des revendications 2 à 6, caractérisé en ce que l'axe primaire (3) porte le moyeu (16) du premier embrayage E₁, 18 destiné à rendre solidaire l'axe (3) primaire du premier planétaire P₁ (6).

**[8]** Dispositif de changement de vitesses selon l'une quelconque des revendications 2 à 7, caractérisé en ce que l'axe primaire (3) porte le moyeu (27) du second embrayage E₂, 15, destiné à rendre solidaire l'axe primaire (3) du porte-satellite (8).

**[9]** Dispositif de changement de vitesses selon l'une quelconque des revendications 2 à 8, caractérisé en ce que le premier planétaire P₁ (6) peut être immobilisé par rapport au carter (30) à l'aide du premier moyen d'immobilisation F₁ (17).

**[10]** Dispositif de changement de vitesses selon l'une quelconque des revendications 2 à 9, caractérisé en ce que le premier moyen d'immobilisation F₁ (17) est porte par l'axe secondaire (4).

**[11]** Dispositif de changement de vitesses selon l'une quelconque des revendications 2 à 10, caractérisé en ce que la cloche (27′) du second embrayage E₂ (15) peut être immobilisée par rapport au carter (30) à l'aide du second moyen d'immobilisation (14).

**[12]** Dispositif de changement de vitesses selon l'une quelconque des revendications 2 à 11, caractérisé en ce que la cloche (16) du premier embrayage (18) peut être immobilisée par rapport au carter (30) à l'aide du troisième moyen F₃ d'immobilisation (19).

**[13]** Dispositif de changement de vitesses selon l'une quelconque des revendications 2 à 12, caractérisé en ce que le premier rapport de marche avant est obtenu par serrage du premier embrayage E₁ (18) et du premier moyen d'immobilisation F₁ (17).

**[14]** Dispositif de changement de vitesses selon l'une quelconque des revendications 2 à 13, caractérisé en ce que le second rapport de marche avant est obtenu par serrage du second embrayage E₂ (15) et du premier moyen d'immobilisation F₁ (17).

**[15]** Dispositif de changement de vitesses selon l'une quelconque des revendications 2 à 14, caractérisé en ce que le troisième rapport de marche avant est obtenu par serrage du premier et du second embrayages E₁, E₂ (18, 15).

**[16]** Dispositif de changement de vitesses selon l'une quelconque des revendications 2 à 15, caractérisé en ce que le quatrième rapport de marche avant est obtenu par serrage du second embrayage E₂ (15) et du troisième moyen d'immobilisation F₃ (19).

**[17]** Dispositif de changement de vitesses selon l'une quelconque des revendications 2 à 16, caractérisé en ce que la marche arrière est obtenue en serrant le premier embrayage E₁ (18) et le second moyen d'immobilisation F₂ (14).
